(19) Europäisches Patentamt
European Patent Office
Office européen des brevets

(11) **EP 2 525 188 B1**

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(51) Int Cl.:
***G01B 11/24*** *(2006.01)*

(21) Anmeldenummer: **12003802.1**

(22) Anmeldetag: **14.05.2012**

(54) **Justage einer zu prüfenden optischen Fläche in einer Prüfvorrichtung**

Adjustment of an optical surface to be tested in a test device

Ajustement d'une surface optique à contrôler dans un dispositif de contrôle

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2011 DE 102011102196**

(43) Veröffentlichungstag der Anmeldung:
**21.11.2012 Patentblatt 2012/47**

(73) Patentinhaber: **Baden-Württemberg Stiftung gGmbH**
**70191 Stuttgart (DE)**

(72) Erfinder:
• **Baer, Goran**
**70190 Stuttgart (DE)**
• **Osten, Wolfgang**
**70569 Stuttgart (DE)**

(74) Vertreter: **Müller-Boré & Partner Patentanwälte PartG mbB**
**Friedenheimer Brücke 21**
**80639 München (DE)**

(56) Entgegenhaltungen:
**US-A- 4 933 872**

• **G. BAER ET AL.: "Automated surface positioning for a non-null test interferometer", OPTICAL ENGINEERING, Bd. 49, Nr. 9, 15. September 2010 (2010-09-15), Seiten 095602-1-095602-12, XP002680340,**

EP 2 525 188 B1

**Beschreibung**

Die vorliegende Erfindung betrifft ein Verfahren und ein System zum Justieren einer zu prüfenden optischen Fläche, insbesondere einer Oberfläche oder Grenzfläche einer Linse und/oder eines Spiegels, in einer Prüfvorrichtung zur interferometrischen Prüfung der optischen Fläche.

Für eine besonders genaue und schnelle Vermessung oder Überprüfung optischer Grenzflächen und Oberflächen hat sich die Anwendung interferometrischer Verfahren bewährt. Dabei wird das Verhalten von Licht als Welle genutzt, indem eine bekannte Referenzwelle mit einer von der zu untersuchenden Grenz- bzw. Oberfläche insbesondere durch Reflexion oder Brechung beeinflussten Objektwelle überlagert wird. Das durch diese Überlagerung entstehende Intensitätsbild, das Interferogramm, lässt Rückschlüsse auf die zu untersuchende optische Fläche zu. Insbesondere können damit Abweichungen von einer Sollvorgabe für die Fläche, also einer Sollform der Fläche ermittelt werden.

Bei geometrisch sehr einfachen und regelmäßigen Formen der zu untersuchenden optischen Fläche (z.B. Sphäre, Zylinderfläche oder Ebene) kann die Objektwelle durch eine geeignete Interferometeroptik (z.B. eine sogenannte Null-Linse als Interferometerobjektiv) derart an die Geometrie der zu untersuchenden Fläche angepasst werden, dass im Idealfall, also ohne Abweichung der Fläche von der Sollform, die Objektwelle in allen Punkten des Interferogramms die gleiche Phasenlage relativ zur Referenzwelle aufweist. Das Interferogramm ist somit "flach", d.h. es weist überall die gleiche Helligkeit auf. Wird nun die Phasenlagen der Objektwelle oder der Referenzwelle als ganzes durch einen Phasenschieber kontinuierlich verschoben, ändert sich die Helligkeit des Interferogramms. Beim Durchlaufen einer Phasenverschiebung um $2\pi$ durchläuft auch die Helligkeit des Interferogramms genau eine Periode, sie erreicht also ein Maximum und ein Minimum. Jede Abweichung der zu untersuchenden Fläche von den Sollvorgaben ist unmittelbar als eine Abweichung des Interferogramms von dieser "flachen" Gestalt erkennbar. In diesem Fall bilden sich Interferenzstreifen. Da im Idealfall einer perfekten Fläche keine Interferenzstreifen im Interferogramm auftreten, wird dieser Test-Modus auch als Null-Test bezeichnet.

Bei komplizierteren, insbesondere asphärischen Flächen ist es in der Regel sehr schwierig oder in der Praxis zu aufwändig, die Wellenfront der Objektwelle oder der Referenzwelle genau an Form der zu prüfenden Fläche anzupassen. Man kann zwar beispielsweise mit Hilfe computergenerierter Hologramme (CGH) auch Freiformen im Null-Test vermessen. Der Nachteil hierbei ist aber, dass für jede neue Freiform ein neues Hologramm gefertigt werden muss, was zeit- und kostenintensiv ist. Ohne diese Anpassung wird auch im Idealfall einer perfekten Übereinstimmung der zu untersuchenden Fläche mit der Sollform die Null-Test-Bedingung, also ein "flaches" Interferogramm, nicht erreicht. Vielmehr treten auch im Idealfall bereits Interferenzstreifen auf. Je größer die Abweichung der Formen der Wellenfronten zwischen der Objektwelle und der Referenzwelle bei deren Überlagerung ist, desto dichter liegen die Interferenzstreifen. Aus dem Verlauf und der Dichte der Interferenzstreifen kann auf die Abweichung der zu untersuchenden Fläche von der Sollform rückgeschlossen werden. Da selbst im Idealfall einer perfekten Fläche Interferenzstreifen im Interferogramm auftreten, wird dieser Test-Modus auch als Nicht-Null-Test bezeichnet.

Bei diesen interferometrischen Verfahren zum Vermessen oder Überprüfen optischer Flächen besteht das grundsätzliche Problem, dass die zu untersuchende Fläche sehr genau im Strahlengang einer entsprechenden Prüfvorrichtung positioniert werden muss. Jede Abweichung von einer Sollposition und Sollorientierung beeinflusst die Wellenfront der Objektwelle und verändert damit das Interferogramm. Am Messergebnis, also am Interferogramm, lässt sich meist nicht unmittelbar erkennen, ob die ermittelte Topografie der tatsächlichen Oberfläche entspricht, oder die Messung durch eine falsche Positionierung verfälscht ist. Für eine genaue Messung ist es deshalb erforderlich, den Prüfling möglichst genau zu positionieren.

Für rotationssymmetrische asphärische Flächen wird von G. Baer et al. in "Automated surface positioning for a non-null test interferometer", Optical Engineering 49(9), 095602 (September 2010) ein automatisiertes Verfahren zum Positionieren eines Prüflings beschrieben. Der darin vorgeschlagenen analytische Ansatz erfordert allerdings für jede Flächenform die Erstellung und Programmierung einer eigenen Übertragungsfunktion und ist nicht ohne weiteres auf asymmetrische Flächen, insbesondere Freiformflächen anwendbar. Bereits kleine Stellungsabweichungen der Fläche führen zu Veränderungen des Interferogramms, die nicht ohne weiteres von Formabweichungen der Fläche unterschieden werden können. Es ist daher derzeit schwierig, Freiformflächen reproduzierbar zu überprüfen.

US 4,933,872 beschreibt ein Verfahren zur Ermittlung von Aberrationen optischer Abbildungselemente (wie z.B. Linsen) in konventionellen optischen Abbildungssystemen anhand von detektierten Bildpunktfunktionen. Das Verfahren umfasst ein Erfassen von Bildpunktfunktionen für eine vorgegebene Anzahl von Linsen mit unterschiedlichen, bekannten optischen Aberrationen, ein Ermitteln von Merkmalsvektoren ("feature vectors") anhand der erfassten Bildpunktfunktionen und ein Trainieren eines neuronalen Netzes anhand der erfassten Merkmalsvektoren.

Aufgabe der vorliegenden Erfindung ist es, die interferometrische Untersuchung von optischen Flächen dahingehend zu vereinfachen, dass auch Flächen ohne Symmetrie mit hoher Genauigkeit reproduzierbar untersucht werden können.

Diese Aufgabe wird durch ein Verfahren und ein System zum insbesondere automatischen Justieren einer zu untersuchenden optischen Fläche, eine Prüfvorrichtung sowie ein Computerprogrammprodukt mit den in den unabhängigen Ansprüchen angegebenen Merkmalen gelöst. Bevorzugte Ausführungsformen sind Gegenstand der abhängigen Ansprüche.

Somit bietet die Erfindung insbesondere ein Verfahren zum insbesondere automatischen Justieren (Positionieren und/oder Orientieren) einer zu untersuchenden optischen Fläche in einer Prüfvorrichtung zur interferometrischen Untersuchung von Abweichungen, insbesondere fertigungsbedingten Abweichungen, der zu untersuchenden optischen Fläche von Sollvorgaben. Die zu untersuchenden Fläche kann dabei eine Oberfläche oder eine Grenzfläche eine optischen Komponente wie z.B. einer Linse oder eines Spiegels sein. Die Sollvorgaben legen dabei die gewünschte Form der Fläche fest. Dies kann beispielsweise durch eine analytische Beschreibung der Fläche, durch eine Angabe von Pfeilhöhen oder in Form einer Punktwolke erfolgen. Abweichungen einer real gefertigten Fläche beispielsweise aufgrund von Fertigungstoleranzen sollen anschließend interferometrisch untersucht und bewertet werden. Dazu wird die zu untersuchende Fläche in den Interferometer-Strahlengang einer Prüfvorrichtung positioniert.

Erfindungsgemäß umfasst das Verfahren ein Erfassen eines Interferogramms aus der Interferenz zwischen einem von der zu untersuchenden optischen Fläche auslaufenden Objektlicht und einem Referenzlicht bei einer Startstellung bzw. einer momentanen Stellung der zu untersuchenden optischen Fläche (34) in der Prüfvorrichtung. Dabei wird eine von der zu prüfenden optischen Fläche beeinflusste (insbesondere gebrochene oder reflektierte) Wellenfront mit einer Referenzwelle zur Interferenz gebracht. Das erfasste Interferogramm enthält somit Informationen über die Form der zu untersuchenden optischen Fläche.

Erfindungsgemäß umfasst das Verfahren außerdem ein Ermitteln eines Satzes von Wellenfront-Koeffizienten zur Beschreibung der Wellenfront des von der optischen Fläche auslaufenden Objektlichts aus dem erfassten Interferogramm. Vorzugsweise werden als Wellenfront-Koeffizienten Zernike-Koeffizienten des Objektlichts ermittelt. Alternativ könnten auch andere Koeffizienten zu Beschreibung der Wellenfront verwendet werden. Besonders vorteilhaft ist alternativ auch die Verwendung von Frobes Polynomen. Vorteilhaft ist in jedem Fall, wenn die verwendeten Polynome orthogonal sind. Das Ermitteln eines Satzes von Wellenfront-Koeffizienten umfasst damit vorzugsweise ein Entwickeln der Wellenfront des reflektierten Objektlichts nach Zernike-Polynomen, wobei die Zernike-Koeffizienten als Wellenfront-Koeffizienten verwendet werden.

Außerdem umfasst das Verfahren ein Bereitstellen eines neuronalen Netzes, welches trainiert ist, den sich für eine ideale optische Fläche, welche mit den Sollvorgaben übereinstimmt, bei Stellungsabweichungen der idealen optischen Fläche von einer Sollstellung in der Prüfvorrichtung ergebenen Sätzen von Wellenfront-Koeffizienten als Eingabedaten des neuronalen Netzes jeweils die entsprechende Stellungsabweichung als Ausgabedaten des neuronalen Netzes zuzuordnen. Es wird als ein für eine ideale optische Fläche trainiertes neuronales Netz bereitgestellt, welche auf Eingabe-Ausgabe-Datensatzpaare für eine ideal Fläche in der vorgegebenen Sollstellung trainiert ist. Dabei legt jedes Eingabe-Ausgabe-Datensatzpaar die bei einer vorgegebenen Abweichung der Stellung der idealen optischen Fläche von einer vorgegebenen Sollstellung in der Prüfvorrichtung erwarteten Wellenfront-Koeffizienten als Eingabedaten und die vorgegebene Abweichung der Stellung von der Sollstellung als Ausgabedaten fest. Das neuronale Netz wird vorzugsweise als künstliches neuronales Netz bereitgestellt.

Diesem derart bereitgestellten neuronalen Netz wird nun der ermittelte Satz von Wellenfront-Koeffizienten für die zu untersuchende optische Fläche als Eingabedaten zugeführt. Als Ausgabedaten des bereitgestellten neuronalen Netzes wird eine Stellungsabweichung für die zu untersuchende optische Fläche ermittelt und die Stellung der zu untersuchenden optischen Fläche in der Prüfvorrichtung wird gemäß der ermittelten Stellungsabweichung korrigiert.

Damit wird eine sehr zuverlässige, genaue und reproduzierbare Positionierung und/oder Orientierung einer zu untersuchenden optischen Fläche in einer Prüfvorrichtung zur interferometrischen Untersuchung bereitgestellt, ohne dass vorher die insbesondere fertigungsbedingten Formabweichungen der Fläche bekannt sein müssen. Vielmehr schlägt die Erfindung vor, auf Basis einer Wellenfrontanalyse für ein erfasstes Interferogramm der zu untersuchenden, möglicherweise nicht idealen Fläche eine Stellungskorrektur zu ermitteln. Dabei stellte sich erfindungsgemäß heraus, dass ein für Wellenfront-Koeffizienten einer idealen Fläche trainiertes neuronales Netz bei der Anwendung auf die reale Fläche diese Problemstellung sehr effizient und genau löst. Vor allem bei der Verwendung von Zernike-Koeffizienten wird eine hohe Präzision und Reproduzierbarkeit der Stellungskorrektur und damit eine sehr zuverlässige und genaue Überprüfung der Form der optischen Fläche erreicht.

Vorzugsweise umfasst das Bereitstellen eines neuronalen Netzes ein Vorgeben einer Vielzahl von Abweichungen der ideal optischen Fläche von der Sollstellung in der Prüfvorrichtung; ein Berechnen der sich für jede der vorgegebenen Abweichungen für die ideale optische Fläche ergebenen Sätze von Wellenfront-Koeffizienten insbesondere mittels Ray-Tracing; und ein Trainieren des neuronalen Netzes mit den berechneten Sätzen von Wellenfront-Koeffizienten als Eingabedaten und den vorgegebenen Abweichungen als Ausgabedaten.

Vorzugsweise wird das neuronale Netz als Feed-Forward-Netz bereitgestellt, welches eine Ausgabesschicht mit einer Vielzahl von Neuronen (im Folgenden auch Ausgabeneuronen genannt) umfasst. Insbesondere sind die Ausgabeneuronen ausgelegt, Werte für die Stellungsabweichung auszugeben. Dabei ist insbesondere jedes Ausgabeneuron ausgelegt, den Korrekturwert für eine räumliche Dimension (Position und/oder Richtung) auszugeben. Dies wird durch ein entsprechendes Trainieren des neuronalen Netzes erreicht.

Außerdem umfasst das bereitgestellte neuronale Netz vorzugsweise zumindest eine verborgene Schicht mit einer Vielzahl von Neuronen (im Folgenden auch verborgene Neuronen genannt), von denen jedes Neuron mit jedem Neuron der Ausgabeschicht verbunden ist. Die Verbindungen erfolgen dabei insbesondere in Vorwärtsrichtung derart, dass jedes verborgene Neuron der zumindest einen verborgenen Schicht einen Ausgang aufweist, der mit je einem Eingang jedes der Ausgabeneuronen verbunden ist. Vorzugsweise umfasst somit jedes Ausgabeneuron zumindest so viele Eingänge wie die zumindest eine verborgene Schicht an verborgenen Neuronen umfasst. Die einzelnen Gewichtungen der Verbindungen werden bzw. sind durch das Trainieren angepasst. Da diese zumindest eine verborgene Schicht direkt zur Ausgabeschicht verbunden ist, wird sie auch als letzte verborgene Schicht bezeichnet.

Außerdem umfasst das bereitgestellte neuronale Netz vorzugsweise eine Eingabeschicht mit einer Vielzahl von Eingabeknoten, von denen jeder Knoten mit jedem Neuron einer verborgenen Schicht des neuronalen Netzes verbunden ist. Da diese verborgene Schicht direkt mit der Eingabeschicht verbunden ist, wird sie auch als erste verborgene Schicht bezeichnet. Falls das neuronale Netz genau eine verborgenen Schicht aufweist, stellt die erste verborgene Schicht auch gleichzeitig die letzte verborgenen Schicht dar. Die Verbindungen erfolgen dabei insbesondere in Vorwärtsrichtung derart, dass jeder Eingabeknoten mit je einem Eingang jedes der Neuronen der ersten verborgenen Schicht verbunden ist. Vorzugsweise umfasst somit jedes Neuron der ersten verborgenen Schicht zumindest so viele Eingänge wie die Eingabeschicht an Eingabeknoten umfasst. Die einzelnen Gewichtungen der Verbindungen werden bzw. sind durch das Trainieren angepasst.

Vorzugsweise werden die Schritte des Erfassens eines Interferogramms, des Ermittelns eines Satzes von Wellenfront-Koeffizienten, des Zuführens des ermittelten Satzes von Wellenfront-Koeffizienten als Eingabedaten an das neuronale Netz und des Korrigierens der Stellung der zu untersuchenden optischen Fläche mehrfach wiederholt. Damit erreicht man sukzessive eine bessere Annäherung an die Sollstellung. Vorzugsweise werden die genannten Schritte so oft wiederholt bis durchzuführende Korrektur einen vorgegebenen Grenzwert unterschreitet.

In einer besonders bevorzugten Ausführungsform enthält das neuronale Netz genau eine verborgene Schicht. Damit wird ein sehr schnelles Trainieren und vor allem eine sehr schnelle Justage möglich. Selbst bei wiederholtem Durchlaufen der Stellungskorrektur erfordert jeder Durchlauf nur wenig Bearbeitungszeit, so dass die gewünschte Genauigkeit der Stellungskorrektur durch eine Erhöhung der Anzahl an Wiederholungen verbessert werden kann, ohne die gesamte Bearbeitungszeit stark zu erhöhen.

In einer anderen besonders bevorzugten Ausführungsform enthält das neuronale Netz genau zwei verborgene Schichten. Damit ist eine sehr hohe Präzision und Reproduzierbarkeit der Reaktion des neuronalen Netzes selbst bei komplexen Freiformflächen und relativ großen Abweichungen von der Sollstellung möglich, wobei die Trainingszeit und die Bearbeitungszeit durch das neuronale Netz immer noch in einem sehr effizienten Rahmen liegt. Vor allem ist bei der Nutzung von genau zwei verborgenen Schichten die Präzision der Stellungskorrektur bei jedem Durchlaufen des Verfahrens bereits so hoch, dass die Anzahl der erforderlichen Durchläufe sehr niedrig gehalten werden kann.

In einer bevorzugten Ausführungsform umfasst die Eingabeschicht eine Anzahl von Eingabeknoten im Bereich von 10 bis 25, vorzugsweise im Bereich von 10 bis 15. Dabei wird vorzugsweise jedem Eingabeknoten der Wert eines Zernike-Koeffizienten als Eingabedaten zugeführt. Vorzugsweise werden dabei zumindest die Zernike-Koeffizienten erster bis dritter Ordnung berücksichtigt. Weiter bevorzugt werden zumindest auch noch die Zernike-Koeffizienten vierter Ordnung zumindest teilweise berücksichtigt.

In einer bevorzugten Ausführungsform umfasst die zumindest eine verborgene Schicht eine Anzahl von Neuronen im Bereich von 7 bis 12, vorzugsweise im Bereich von 7 bis 10, am meisten bevorzugt 8 oder 9 umfasst. Vor allem bei Verwendung von etwa 10 bis 15 Eingangsknoten liefert ein Konstruktion mit 8 oder 9 verborgenen Neuronen eine äußerst hohe Effizienz aufgrund der sehr guten Reproduzierbarkeit und der kurzen Bearbeitungszeit. Bei Verwendung von zwei verborgenen Schichten umfassen vorzugsweise beide verborgenen Schichten die gleiche Anzahl an Neuronen, wobei der Ausgang jedes Neurons der ersten verborgenen Schicht mit je einem Eingang jedes der Neuronen der zweiten (letzten) verborgenen Schicht vorwärts verbunden ist. Die Gewichte der Verbindungen werden bzw. sind beim Trainieren ermittelt.

In einer bevorzugten Ausführungsform umfasst die Ausgabeschicht 5 Neuronen. Dabei ist vorzugsweise jedes Ausgabeneuron ausgelegt einen Wert der Stellungskorrektur für eine räumliche Dimension auszugeben. Damit werden insbesondere fünf räumliche Dimensionen korrigiert. Besonders bevorzugt sind dies drei senkrecht zueinander stehende Translationen und zwei Rotationen jeweils um eine Achse, die nicht parallel zur Einstrahlrichtung der Objektwelle auf die zu untersuchende optische Fläche liegt.

Besonders bevorzugt weisen die Neuronen der Ausgabeschicht eine lineare Aktivierungsfunktion auf. Damit lässt sich ein besonders gutes dynamisches Verhalten der Stellungskorrektur für verschiedenen Abweichungen von der Sollstellung erreichen.

Besonders bevorzugt weisen die Neuronen der zumindest einen verborgenen Schicht eine endliche, vorzugsweise differenzierbare Aktivierungsfunktion, insbesondere eine Sigmoid-Funktion auf. Damit wird einerseits eine schnelle und stabile Reaktion des neuronalen Netzes sowohl bei der Stellungskorrektur, vor allem aber bereits beim Trainieren erreicht.

Vorzugsweise werden beim Bereitstellen des neuronalen Netzes als Trainingswerte die Zernike-Koeffizienten für eine Anzahl von verschiedenen Abweichungen von der Sollposition im Bereich von etwa 150 bis etwa 1000, vorzugsweise im Bereich von etwa 200 bis etwa 500 ermittelt bzw. vorgegeben. Besonders bevorzugt wird die Verteilung der vorgegebenen Abweichungen von der Sollposition so gewählt, dass die Dichte der vorgegebenen Abweichungswerte bei kleineren Werte höher ist als bei größeren Abweichungen (z.B. gemäß einer Gauß-Verteilung). Damit kann mit vergleichsweise geringem Trainingsaufwand ein sehr wirkungsvolles und genaues neuronales Netz bereitgestellt werden.

Außerdem bietet die Erfindung ein System zum insbesondere automatischen Justieren (Positionieren und/oder Orientieren) einer zu untersuchenden optischen Fläche (z.B. Oberfläche bzw. Grenzfläche einer Linse, eines Spiegels, usw.) in einer Prüfvorrichtung zur interferometrischen Untersuchung von Abweichungen (insbesondere fertigungsbedingter Abweichungen) der zu untersuchenden optischen Fläche von Sollvorgaben, umfassend:

- eine Bilddatenerfassungseinrichtung (z.B. in Form einer Kamera oder einer Datenschnittstelle zu einer entsprechenden Kamera) zum Erfassen eines Interferogramms aus der Interferenz zwischen einem von der optischen Fläche auslaufenden Objektlicht und einem Referenzlicht bei einer Startstellung (bzw. einer momentanen Stellung) der zu untersuchenden optischen Fläche in der Prüfvorrichtung;
- ein Analysator-Modul zum Ermitteln eines Satzes von Wellenfront-Koeffizienten zur Beschreibung der Wellenfront des von der optischen Fläche auslaufenden Objektlichts aus dem erfassten Interferogramm;
- ein neuronales Netz, welches trainiert ist, den sich für eine ideale optische Fläche, welche mit den Sollvorgaben übereinstimmt, bei Stellungsabweichungen der idealen optischen Fläche von einer Sollstellung in der Prüfvorrichtung ergebenen Sätzen von Wellenfront-Koeffizienten als Eingabedaten des neuronalen Netzes jeweils die entsprechende Stellungsabweichung als Ausgabedaten des neuronalen Netzes zuzuordnen,

wobei das neuronale Netz mit dem Analysator-Modul zur Übertragung des ermittelten Satzes von Wellenfront-Koeffizienten für die zu untersuchende optische Fläche als Eingabedaten für das neuronale Netz in Signalverbindung steht und zur Ermittlung einer Stellungsabweichung für die zu untersuchende optische Fläche als Ausgabedaten ausgelegt ist; und wobei das System eine Stellungskorrekturschnittstelle zum Ausgeben von Stellungskorrekturdaten für die Korrektur der Stellung der zu untersuchenden optischen Fläche in der Prüfvorrichtung gemäß der vom neuronalen Netz ermittelten Stellungsabweichung für die zu untersuchende optische Fläche umfasst.

Vorzugsweise umfasst das System ein Simulator-Modul, das ausgelegt ist, den sich für jede einer Vielzahl von vorgegebenen Abweichungen der idealen optischen Fläche von der Sollstellung in der Prüfvorrichtung ergebenden Satz von Wellenfront-Koeffizienten insbesondere mittels Ray-Tracing zur berechnen, wobei das Simulator-Modul mit dem neuronalen Netz zum Trainieren des neuronalen Netzes mit den berechneten Sätzen von Wellenfront-Koeffizienten als Eingabedaten und den vorgegebenen Abweichungen als Ausgabedaten verbunden oder verbindbar ist.

In einer weiteren bevorzugten Ausführungsform des Systems ist das neuronale Netz ein Feed-Forward-Netz, welches insbesondere umfasst:

- eine Ausgabesschicht mit einer Vielzahl von Neuronen (Ausgabeneuronen), welche ausgelegt sind, Werte für die Stellungsabweichung auszugeben; (Insbesondere ist jedes Ausgabeneuron ausgelegt, den Korrekturwert für eine räumliche Dimension auszugeben. Dies wird durch ein entsprechendes Trainieren des neuronalen Netzes erreicht.);
- zumindest eine verborgene Schicht mit einer Vielzahl von Neuronen (verborgene Neuronen), von denen jedes Neuron mit jedem Neuron der Ausgabeschicht verbunden ist; und
- eine Eingabeschicht mit einer Vielzahl von Eingabeknoten, von denen jeder Knoten mit jedem Neuron einer verborgenen Schicht des neuronalen Netzes verbunden ist.

Außerdem stellt die Erfindung eine Prüfvorrichtung bereit zur interferometrischen Untersuchung von Abweichungen (insbesondere fertigungsbedingter Abweichungen) einer zu untersuchenden optischen Fläche von Sollvorgaben umfassend:

- ein Interferometer zur Erzeugung eines Interferogramms aus der Interferenz zwischen einem an der optischen Fläche reflektierten Objektlicht und einem Referenzlicht bei einer Startstellung (bzw. einer momentanen Stellung) der zu untersuchenden optischen Fläche in der Prüfvorrichtung;
- ein System gemäß Anspruch 12 oder 13 zum insbesondere automatischen Justieren (Positionieren und/oder Orientieren) der zu untersuchenden optischen Fläche im Strahlengang des Interferometers; und
- eine Manipulationseinheit zum Korrigieren der Stellung der optischen Fläche in der Prüfvorrichtung gemäß den ausgegebenen Stellungskorrekturdaten.

Die Erfindung bietet außerdem ein Computerprogrammprodukt, insbesondere in Form eines maschinenlesbaren Mediums, als Signal und/oder als Datenstrom ausgestaltet, welches maschinenlesbaren Programmcode umfasst, der, wenn er geladen wird auf einem Computer, zur Ausführung eines Verfahrens gemäß der vorliegenden Erfindung in einer oder mehreren der beschriebenen Ausführungsformen führt bzw. geeignet ist.

In einem weiteren Aspekt ist die Erfindung nicht auf die Anwendung in Prüfvorrichtungen zur interferometrischen Untersuchung beschränkt. Vielmehr kann die Erfindung in diesem Aspekt auch auf deflektometrische Untersuchungen von Abweichungen der zu untersuchenden optischen Fläche von Sollvorgaben verwendet werden. So bietet die Erfindung in diesem Aspekt insbesondere ein System und ein Verfahren zum Justieren einer zu untersuchenden optischen Fläche in einer Prüfvorrichtung zur deflektometrischen Untersuchung von Abweichungen der zu untersuchenden optischen Fläche von Sollvorgaben. Dazu umfasst das Verfahren insbesondere: ein Erfassen von Messdaten einer deflektometrischen Untersuchung bzw. Vermessung der zu untersuchenden optischen Fläche bei einer Startstellung der zu untersuchenden optischen Fläche in der Prüfvorrichtung; ein Ermitteln eines Satzes von Koeffizienten zur Beschreibung der zu untersuchenden Oberfläche und/oder der deflektometrischen Messdaten in der Startstellung der Oberfläche; Bereitstellen eines neuronalen Netzes, welches trainiert ist, den sich für eine ideale optische Fläche, welche mit den Sollvorgaben übereinstimmt, bei Stellungsabweichungen der idealen optischen Fläche von einer Sollstellung in der Prüfvorrichtung ergebenen Sätzen von Koeffizienten zur Beschreibung der zu untersuchenden Oberfläche und/oder der deflektometrischen Messdaten als Eingabedaten des neuronalen Netzes jeweils die entsprechende Stellungsabweichung als Ausgabedaten des neuronalen Netzes zuzuordnen; Zuführen des ermittelten Satzes von Koeffizienten zur Beschreibung der zu untersuchenden Oberfläche und/oder der deflektometrischen Messdaten als Eingabedaten für das bereitgestellte neuronale Netz zur Ermittlung einer Stellungsabweichung für die zu untersuchende optische Fläche als Ausgabedaten des bereitgestellten neuronalen Netzes; und Korrigieren der Stellung der zu untersuchenden optischen Fläche in der Prüfvorrichtung gemäß der ermittelten Stellungsabweichung für die zu untersuchende optische Fläche. Auch die weiteren Ausführungen zu bevorzugten Ausführungsformen der Anwendung auf interferometrische Untersuchungen können in entsprechend bevorzugter Weise auf die Anwendung für deflektometrische Untersuchungen übertragen werden.

Die Erfindung wird nachfolgend anhand bevorzugter Ausführungsformen mit Bezug auf die begleitende Zeichnungen beschrieben. Dabei zeigen:

Fig. 1    ein Prüfsystem zu Implementierung der Erfindung in einer bevorzugten Ausführungsform;

Fig. 2    eine schematische Darstellung zur Veranschaulichung der Funktionsweise eines Neurons, wie es in einem neuronalen Netz gemäß der Erfindung vorzugsweise Verwendung finden kann;

Fig. 3    eine grafische Darstellung einer Aktivierungsfunktion, wie sie vorzugsweise in verborgenen Neuronen einer bevorzugten Ausführungsform der Erfindung Verwendung finden kann; und

Fig.4    eine schematische Darstellung eines Ausschnitts eines neuronalen Netzes gemäß einer bevorzugten Ausführungsform der Erfindung.

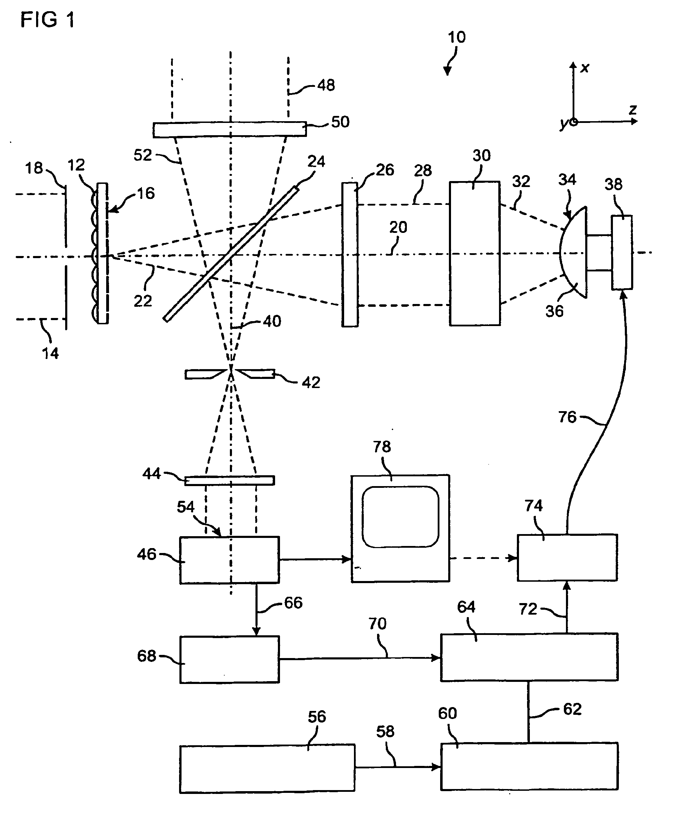

**Fig. 1** zeigt eine Prüfsystem 10, in dem die Erfindung gemäß einer bevorzugten Ausführungsform implementiert ist. In dieser Ausführungsform umfasst das Prüfsystem 10 ein Interferometer mit einem Mikrolinsen-Array 12, auf das ein kollimierter Lichtstrahl 14 trifft. Das Mikrolinsen-Array 12 wird von einem Lochblenden-Array 16 gefolgt, um ein Punktlichtquellen-Array zu bilden. Dabei ist vorzugsweise jedem Loch des Lochblenden-Arrays 16 eine Mikrolinse des Mikrolinsen-Arrays 12 zugeordnet, die einen Teil des eintreffenden Lichtstrahls 14 auf das entsprechende Loch fokussiert. Von jedem Loch des Lochblenden-Arrays 16 geht eine Lichtwelle mit einer kugelförmigen Wellenfront aus. Durch ein geeignetes Eingangsblendenelement 18 wird wahlweise ein Teil des kollimierten Lichtstrahls 14 ausgeblendet, so dass wahlweise nur ein Teil des Lochblenden-Arrays 16 beleuchtet wird.

In einer bevorzugten Ausführungsform wird zum Justieren einer zu untersuchenden Fläche im bzw. relativ zum Strahlengang des Interferometers nur ein Loch des Lochblenden-Arrays 16 beleuchtet. Dies vereinfacht die Auswertung des entstehenden Interferogramms zum Zweck der Justage. Besonders bevorzugt wird hierzu ein Loch auf einer ersten optischen Achse 20 oder in der Nähe der ersten optischen Achse 20 des Interferometers ausgewählt. Die Ausbreitung der von diesem ausgewählten Loch ausgehenden kugelförmigen Lichtwelle 22 ist in Fig. 1 durch gestrichelte Linien schematisch veranschaulicht. Wie im folgenden erkennbar wird, bildet die Lichtwelle 22 einen Ausgangspunkt einer Objektwelle. In der bevorzugten Ausführungsform von Fig. 1 passiert diese Lichtwellenfront 22 (Objektwelle) einen Strahlteiler 24 bevor sie auf einen Kollimator in Form einer Objektstrahl-Kollimationslinse 26 trifft, durch die die Lichtstrahlen der Lichtwelle 22 parallel gerichtet werden. In dieser bevorzugten Ausführungsform entsteht somit nach der Kollimationslinse 26 eine ebene Objektwelle 28. Vorzugsweise verlaufen die Lichtstrahlen der Objektwelle 28 parallel zur ersten optischen Achse 20 des Interferometers. Dies kann dann am einfachsten erreicht werden, wenn bereits die Kugelwelle 22 von der ersten optischen Achse 20 ausgeht.

Die ebene Wellenfront 28 der Objektwelle trifft anschließend auf ein Interferometerobjektiv 30, das die Objektwelle vorzugsweise wieder zu einer zusammenlaufenden Kugelwelle 32 umformt, die dann auf eine zu untersuchende optische Fläche 34 eines Prüflings 36 trifft. Der Prüfling 36 (z.B. eine Linse) ist an einer Manipulationseinheit 38 befestigt, mittels der der Prüfling 36 in verschiedene Richtungen verschoben und gedreht werden kann. Zur Veranschaulichung möglicher Manipulationen des Prüflings 36 im Strahlengang des Interferometers gemäß einer bevorzugten Ausführungsform ist in Fig. 1 ein x-y-z-Koordinatensystem dargestellt. Vorzugsweise liegt dabei die z-Achse parallel zur ersten optischen Achse 20, während die x-Achse und die y-Achse senkrecht dazu liegen. Vorzugsweise ist die Manipulationseinheit 38 ausgelegt, den Prüfling 36 und damit auch dessen zu untersuchende optische Oberfläche 34 durch Translationen in den x-, y- und z-Richtungen relativ zum Interferometerobjektiv 30 zu verschieben sowie durch Rotationen um die x- und die y-Achse relativ zum Interferometerobjektiv 30 zu rotieren. Damit kann die optische Fläche 34 in eine vorgegebene Sollstellung in der Prüfvorrichtung 10 gebracht werden.

Die auf die optische Fläche 34 treffende Objektwelle 32 wird dort zumindest teilweise reflektiert. Der reflektierte Anteil der Objektwelle durchläuft anschließend zumindest teilweise wieder das Interferometerobjektiv 32 und die Kollimationslinse 26 und wird zumindest teilweise am Strahlteiler 24 reflektiert um anschließend im Wesentlichen parallel zu einer zweiten optischen Achse 40 durch eine Blende 42 (Interferometerapertur) und eine Abbildungslinse 44 auf eine Kamera 46 zu treffen.

Der Strahlverlauf bzw. die Form der Wellenfront des an der optischen Fläche 34 reflektierten Objektlichts hängt dabei von der Form der optischen Fläche 34 ab. Umgekehrt lässt sich durch eine Analyse der an der Kamera 46 eintreffenden Wellenfront des reflektierten Objektlichts auf die Form der optischen Fläche 34 schließen. Um die Wellenfront des reflektierten Objektlichts zu untersuchen, wird dieses mit einem Referenzlicht zur Interferenz gebracht. Dazu wird ein kollimierter Referenzlichtstrahl 48 mit einer gegenüber dem Objektlichtstrahl 14 festen Phasenlage entlang der zweiten optischen Achse 40 der Prüfvorrichtung 10 durch eine Referenzstrahl-Kollimationslinse 50 eingestrahlt. In der in Fig. 1 dargestellten bevorzugten Ausführungsform durchläuft das Referenzlicht 52 im Wesentlichen entlang der zweiten optischen Achse 40 den Strahlteiler 24, die Interferometerapertur 42 und die Abbildungslinse 44 und bildet schließlich durch Interferenz mit dem reflektierten Objektlicht an der Kamera 46 ein Interferenzbild 54 (Interferogramm). Dieses Interferogramm wird von der Kamera 46 für die weitere Verarbeitung als Bilddaten erfasst.

Je nach Form der optischen Fläche 34 und je nach Betriebsmodus des Interferometers werden für eine perfekte Übereinstimmung der Fläche 34 mit entsprechenden Sollvorgaben unterschiedliche Interferogramme 54 erwartet. Handelt es sich bei der optischen Fläche 34 beispielsweise um eine sphärische Fläche, auf die die Objektwelle 32 nach einer Anpassung durch eine entsprechende Null-Linse als Interferometerobjektiv 30 in allen Punkten senkrecht trifft, weist der reflektierte Anteil der Objektwelle in allen Punkten des Interferogramms 54 vorzugsweise die gleiche Phasenlage relativ zur Referenzwelle auf. Es entsteht somit ein flaches, also strukturloses Interferogramm. Wie bereits oben ausgeführt, wird dieser Modus als Null-Test bezeichnet.

Insbesondere für eine nicht rotationssymmetrische, asphärische Fläche 34 ist es hingegen schwierig oder unmöglich, eine entsprechende Null-Linse als Interferometerobjektiv 30 bereitzustellen. Die Wellenfront des Objektlichts 32 kann somit nicht exakt auf die ideale Fläche 34 abgestimmt werden. Damit ergeben sich selbst bei einer perfekten Übereinstimmung der optischen Fläche 34 mit entsprechenden Sollvorgaben im Interferogramm 54 ortsabhängige Unterschiede in der Phasenlage des Objektlichts relativ zum Referenzlicht. Dies führt selbst im Idealfall einer perfekt gefertigten Fläche 34 im Interferogramm 54 zu Interferenzstreifen. Um eine Abweichung der optischen Fläche 34 von Sollvorgaben zu überprüfen, wird das erfasste Interferogramm mit einem erwarteten (idealen) Interferogramm verglichen. Da das erwartete Interferogramm selbst im Idealfall von der Stellung (Position und Orientierung) der optischen Fläche 34 im Strahlengang des Interferometers abhängt, wird für die Messung und den Vergleich eine Sollstellung vorgegeben. Diese Sollstellung legt insbesondere die Position der zu untersuchenden Fläche in drei Dimensionen sowie die Orientierung in zumindest zwei Dimensionen fest. Eine Rotation um die erste optische Achse 20 führt lediglich zu einer Drehung des Interferogramms und muss nicht korrigiert werden.

Als Sollstellung wird vorzugsweise eine Stellung einer idealen optischen Fläche (also einer mit den Sollvorgaben für die optische Fläche exakt übereinstimmenden Fläche) bestimmt, in der im Interferogramm zumindest Bereichsweise eine möglichst geringe Dichte an Interferenzstreifen entsteht. Damit ist eine Erfassung des Interferogramms mittels einer Kamera und eine anschließende Auswertung des Interferogramms leichter und genauer möglich. Die Sollstellung entspricht daher beispielsweise einer Stellung, in der die auf die optische Fläche treffende Wellenfront möglichst wenig von der Form der optischen Fläche abweicht.

Diese Sollstellung muss auch für die Untersuchung oder Überprüfung der realen optischen Fläche 34 eingehalten werden, wenn man Abweichungen des realen Interferogramms 54 vom idealen Interferogramm eindeutig einer Abweichung der Form der optischen Fläche 34 und einer Fehlstellung des Prüflings 36 zuschreiben können will. Dazu wird die optische Fläche insbesondere in der beanspruchten Weise automatisch im Strahlengang des Interferometers justiert.

In der in Fig. 1 dargestellten bevorzugten Ausführungsform weist das Prüfsystem 10 dafür eine Modell-Eingabe-Schnittstelle 56 auf, mittels der dem Prüfsystem die erforderlichen Daten zur Beschreibung oder Definition der Sollvorgaben für die optische Fläche 34 sowie die erforderlichen optischen Eigenschaften des Interferometers zur Ermittlung eines zu erwartenden, idealen Interferogramms bereitgestellt werden. Diese Solldaten 58 werden anschließend an einen Simulator 60 übermittelt, der ausgelegt ist, mittels Ray-Tracing die zu erwartenden Interferogramme bzw. die Wellenfront der von der optischen Fläche 34 auslaufenden Objektwelle 32 zu berechnen.

Nun wird eine Vielzahl von Abweichungen der idealen optischen Fläche von der Sollstellung vorgegeben und mittels des Simulators 60 die dazu erwartete Wellenfront der auslaufenden Objektwelle bzw. das sich dafür ergebende Interferogramm berechnet. Die jeweils erwartete Wellenfront wird durch Wellenfront-Koeffizienten, insbesondere durch Zernike-Koeffizienten ausgedrückt. Der Simulator stellt also eine Vielzahl von Datensatz-Paaren bereit, wobei jedes Datensatz-Paar einen Datensatz mit den vorgegebenen Abweichungskoordinaten von der Sollstellung und einen zugehörigen Datensatz mit den berechneten Wellenfront-Koeffizienten umfasst. Diese Vielzahl von Datensatzpaaren 62 wird an das neuronale Netz 64 zum Trainieren des neuronalen Netzes übertragen. Dabei dienen jeweils die Datensätze der Wellenfront-Koeffizienten als Eingabedaten, während die zugehörigen Datensätze der Abweichungskoordinaten als Ausgabedaten dienen.

Nachdem auf diese Weise das neuronale Netz 64 mit Daten für die ideale (also perfekte) optische Fläche trainiert wurde, wird es zur Korrektur der Stellung der realen, zu untersuchenden (im Allgemeinen nicht perfekten) optischen Fläche 34 genutzt. Dazu werden Bilddaten 66 des Interferogramms 54 an ein Analyse-Modul 68 übertragen, welches ausgelegt ist, aus den Bilddaten des Interferogramms einen Satz von Wellenfront-Koeffizienten zur Beschreibung der Wellenfront des von der zu untersuchenden optischen Fläche 34 auslaufenden Objektlichts zu ermitteln. Vorzugsweise handelt es sich hierbei um Zernike-Koeffizienten.

Diese Wellenfront-Koeffizienten 70 werden anschließend an das trainierte neuronale Netz 64 als Eingabedaten übermittelt. Als Ausgabedaten des neuronalen Netzes 64 ergeben sich Werte 72 einer Stellungsabweichung oder Stellungskorrektur, die in der in Fig. 1 dargestellten bevorzugten Ausführungsform insbesondere für eine automatische Justierung der Fläche 34 an eine Treibereinheit 74 übermittelt werden. In Abhängigkeit von diesen Signalen/Daten 72 erzeugt die Treibereinheit 74 wiederum Steuersignale 76, die zur Steuerung der Manipulationseinheit 38 für eine Korrektur der Stellung der Fläche 34 gemäß den vom neuronalen Netz 64 ausgegebenen Korrekturwerten dienen.

In der in Fig. 1 dargestellten bevorzugten Ausführungsform umfasst die Prüfvorrichtung außerdem ein Anzeige-Modul (z.B. einen Bildschirm) mittels dessen das Interferogramm für einen Benutzer grafisch dargestellt werden kann. Damit kann der Benutzer beispielsweise eine anfängliche Grobjustierung manuell vornehmen. Alternativ oder zusätzlich ist es auch möglich, eine Grobjustierung bereits automatisch durchzuführen, wie dies beispielsweise auch in der eingangs erwähnten Publikation von G. Baer et al. (Optical Engineering 49(9), 095602) bereits beschrieben ist. Anders als für einfache rotationssymmetrische Flächen ist eine insbesondere automatisierte Justierung von Freiformfläche aber nicht so ohne weiteres mit der in dieser Publikation beschriebenen Vorgehensweise durchführbar.

Insbesondere ist es bei Freiformflächen im Allgemeinen nicht möglich Kippung mit Hilfe von Dezentrierung bzw. andersherum zu kompensieren. Dies ist nur zulässig, wenn aufgrund des Herstellungsverfahrens ausgeschlossen werden kann, dass Oberflächenfehler in Form von Koma oder Astigmatismus auftreten. Es ist deshalb nötig die Korrektur nicht nur in den drei translatorischen Achsen x, y und z durchzuführen, sondern zusätzlich die Kippung, also eine Drehung um die x- sowie die y-Achse zu korrigieren. Allerdings ist die Erkennung der Art der Dejustage hier nicht mehr trivial. Eine Veränderung des Zernike-Koeffizienten für Kippung $Z_2 = 2r\cos(\Theta)$ bzw. $Z_3 = 2r\sin(\Theta)$ kann sowohl durch Kippung, als auch eine Dezentrierung zustande kommen.

Um zwischen den verschiedenen Fällen unterscheiden zu können, werden in einer bevorzugten Ausführungsform der Erfindung auch Informationen einbezogen, die man aus den Zernike-Koeffizienten höherer Ordnungen erhält. Allerdings ist die Abbildung der Zernike-Polynome auf die Dejustage stark nichtlinear und des Weiteren von der jeweiligen Freiformfläche abhängig. Dieses Problem ist somit nur schwer analytisch zu lösen. Außerdem müsste für jede zu vermessende Freiformfläche erneut eine Lösung gefunden werden.

Bei dem erfindungsgemäßen Ansatz hingegen kann auf eine analytische Lösung verzichtet werden, indem die Berechnung für die zu untersuchende reale Fläche mit Hilfe eines für eine ideale Fläche trainierten neuronalen Netzes durchgeführt wird. Dies hat den Vorteil, dass die Methode auch für Freiformfläche funktioniert, deren Oberfläche nicht durch eine mathematische Funktion, sondern durch eine Punktwolke oder beliebige andere Darstellungsarten gegeben ist. Außerdem muss zum Adaptieren der Positionierstrategie auf einen neuen Prüfling nicht jeweils eine neue Übertragungsfunktion berechnet werden. Stattdessen ist es ausreichend das neuronale Netz mit den entsprechenden Daten zu trainieren.

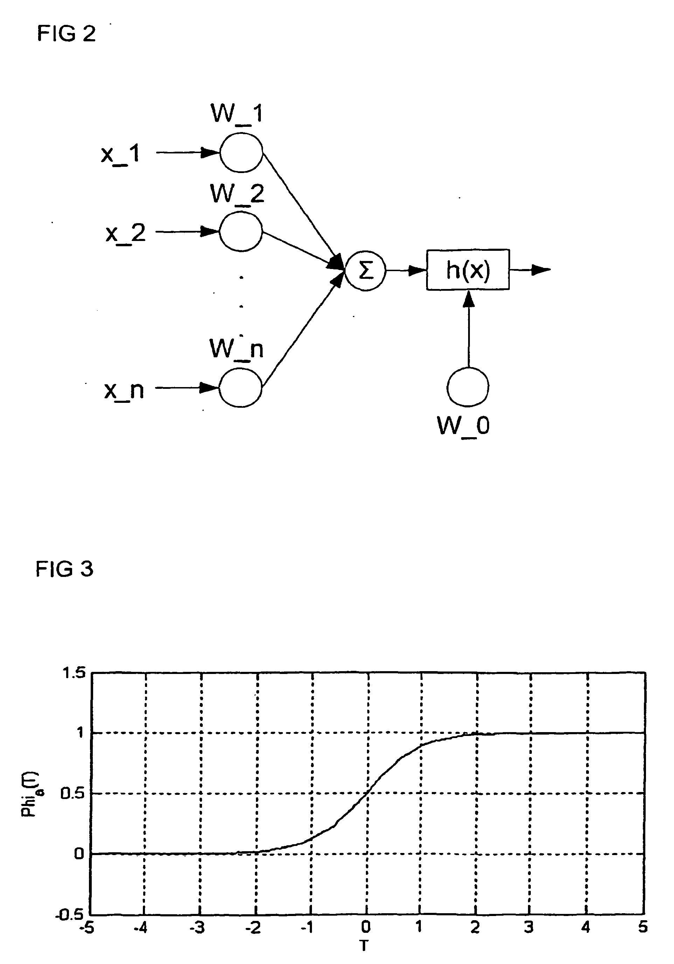

Ein künstliches Neuronales Netz besteht, wie sein natürliches Vorbild aus einer Vielzahl von Neuronen, welche miteinander Verknüpft sind. Je nach Art oder Komplexität der Aufgabe ist die Anzahl der verwendeten Neuronen anzupassen. Der grundlegende Aufbau eines Neurons ist in **Fig. 2** schematisch dargestellt.

Ein Neuron besitzt mehrere Eingänge, die jeweils mittels eines Parameters $W_i$ gewichtet sind. Die Eingänge fließen abhängig von ihrem Gewicht in die Übertragungsfunktion

EP 2 525 188 B1

$$T(x_i) = \sum_{1}^{n} x_i W_i$$

mit ein. Die Ausgabe des Neurons wird durch die Aktivierungsfunktion h(x) bestimmt. Diese kann je nach Problem durch unterschiedliche Funktionen wie beispielsweise eine Signum-Funktion, eine teilweise lineare Funktion oder auch durch eine Sigmoide Funktion ausgeführt sein. Die Sigmoide Funktion ist definiert durch

$$\varphi_a(T) = \frac{1}{1 + e^{-aT}}$$

**Fig. 3** zeigt den Plot einer Sigmoiden Funktion mit a = 2

Der Vorteil bei der Verwendung einer Sigmoiden Funktion als Aktivierungsfunktion insbesondere in verborgenen Schichten des neuronalen Netzes liegt darin, dass diese differenzierbar ist, was für einige Verfahren zum Trainieren des Netzes besonders vorteilhaft ist. Um ein neuronales Netz zu erhalten werden mehrere dieser Neuronen zusammengeschlossen. Hierfür gibt es mehrere Arten der möglichen Verbindungen zwischen Neuronen. Das für die Aufgabe der Positionierung vorzugsweise verwendete Netz ist ein Feed-Forward-Netz.

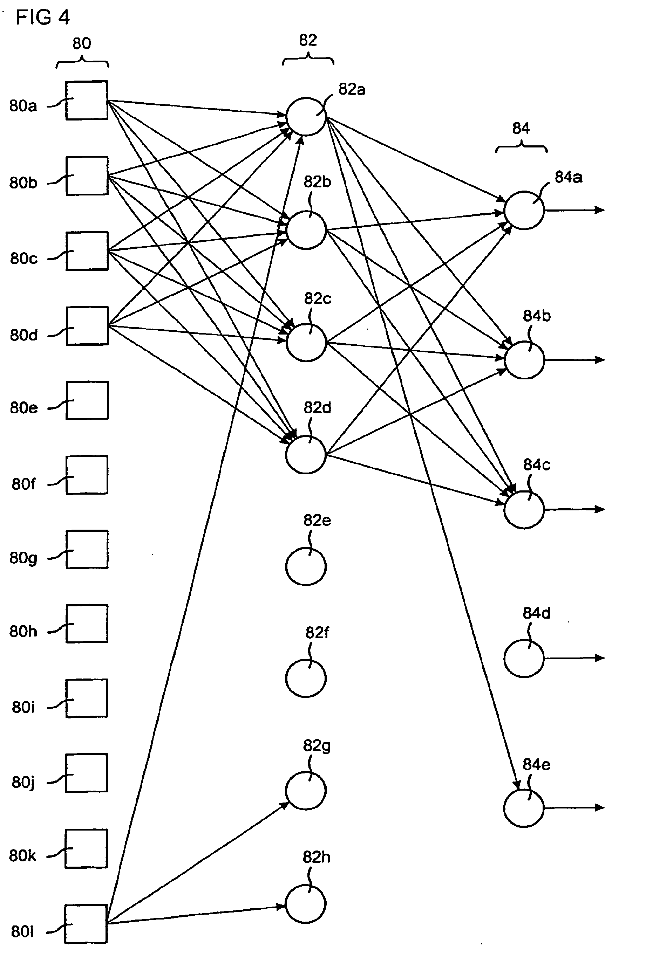

Der Aufbau eines Feed-Forward-Netzes gemäß einer bevorzugten Ausführungsform der Erfindung ist in **Fig. 4** dargestellt. In dieser Ausführungsform umfasst das neuronale Netz eine Eingabeschicht 80, einer verborgenen Schicht 82 und einer Ausgabeschicht 84. Die Eingabeschicht 80 umfasst eine Vielzahl von Eingangsknoten 80a, 80b, ... 801. Insbesondere sind in der dargestellten Ausführungsform 12 Eingabeknoten gezeigt. Vorzugsweise wird jedem Eingabeknoten ein Wert eine Wellenfront-Koeffizienten (z.B. Zernike-Koeffizienten) zugeführt.

Die verborgenen Schicht 82 umfasst eine Vielzahl von verborgenen Neuronen 82a, 82b, ... 82h. Insbesondere sind in der dargestellten bevorzugten Ausführungsform 8 verborgene Neuronen gezeigt. Vorzugsweise ist jeder Eingabeknoten mit jedem verborgenen Neuron verbunden, auch wenn in Fig. 4 nur beispielhaft einige dieser Verbindungen dargestellt sind. Die Gewichte der Verbindungen sind oder werden durch das Trainieren festgelegt oder ermittelt.

In einer anderen, nicht dargestellten bevorzugten Ausführungsform enthält das neuronale Netz zwei verborgenen Schichten, die analog zu der dargestellten verborgenen Schicht 82 ausgebildet sein können, allerdings unmittelbar hintereinander geschaltet und miteinander verbunden sind, wobei insbesondere jedes erste verborgene Neuron (erste verborgene Schicht) mit jedem zweiten verborgenen Neuron (zweite verborgene Schicht) verbunden ist. Die Gewichte der Verbindungen sind oder werden durch das Trainieren festgelegt oder ermittelt.

Die Ausgabeschicht 84 umfasst eine Vielzahl von Ausgabeneuronen 84a, 84b, ... 84e. Insbesondere sind in der dargestellten Ausführungsform 5 Ausgabeneuronen gezeigt. Vorzugsweise gibt jedes Ausgabeneuron den Wert einer räumlichen Dimension der Stellungskorrektur aus. Die Ausgabeneuronen repräsentieren dabei vorzugsweise drei Translationen und zwei Rotationen. Vorzugsweise ist jedes verborgene Neuron mit jedem Ausgabeneuron verbunden, auch wenn in Fig. 4 nur beispielhaft einige dieser Verbindungen dargestellt sind. Die Gewichte der Verbindungen sind oder werden durch das Trainieren festgelegt oder ermittelt.

Die Eingabewerte, vorzugsweise Zernike-Koeffizienten, werden jeweils von den Eingabeknoten auf die Neuronen der (ersten) verborgenen Schicht 82 weitergegeben. Diese gibt entsprechend genierte Signale gegebenenfalls auf die nächste verborgene Schicht weiter. Die letzte verborgene Schicht gibt entsprechend generierte Signale an die Ausgabeschicht weiter, welche dann die Ausgabewerte, also die Position bzw. Positionskorrektur des Prüflings ausgibt. Der Name Feed-Forward-Netz kommt daher, dass Verbindungen immer nur zwischen den Neuronen einer Schicht und der darauffolgenden bestehen. Verbindungen innerhalb der Schicht oder von einer weiter hinten liegenden Schicht zu einer davor sind in diesem Fall nicht vorhanden. Als neuronales Netz wird vorzugsweise ein künstliches (computer-implementiertes) neuronales Netz bereitgestellt.

In einer bevorzugten Ausführungsform besteht die Eingabeschicht aus 12 Eingängen (Eingabeknoten), welchen vorzugsweise jeweils ein Wert eines Zernike-Koeffizienten gemäß einer Entwicklung der Wellenfront $W(r,\Theta)$ nach Zernike-Polynomen zugeführt wird, wobei

$$W(r,\Theta) = \sum_{n,m} c_n^m \cdot Z_n^m(r,\Theta)$$

Vorzugsweise werden folgende 12 Zernike-Polynome berücksichtigt:

Tabelle 1: Verwendete Zernike-Koeffizienten

| $Z_1^1(r,\Theta)$ | Tip | $r \cdot \cos(\Theta)$ |
|---|---|---|
| $Z_1^{-1}(r,\Theta)$ | Tilt | $r \cdot \sin(\Theta)$ |
| $Z_2^0(r,\Theta)$ | Defokus | $2r^2 - 1$ |
| $Z_2^2(r,\Theta)$ | Astigmatismus | $r^2 \cdot \cos(2 \cdot \Theta)$ |
| $Z_2^{-2}(r,\Theta)$ | Astigmatismus | $r^2 \cdot \sin(2 \cdot \Theta)$ |
| $Z_3^1(r,\Theta)$ | Koma | $(3r^3 - 2r) \cdot \cos(\Theta)$ |
| $Z_3^{-1}(r,\Theta)$ | Koma | $(3r^3 - 2r) \cdot \sin(\Theta)$ |
| $Z_3^3(r,\Theta)$ | Trefoil | $r^3 \cdot \cos(3\Theta)$ |
| $Z_3^{-3}(r,\Theta)$ | Trefoil | $r^3 \cdot \sin(3\Theta)$ |
| $Z_4^0(r,\Theta)$ | Sphärische Aberration | $6r^4 - 6r^2 + 1$ |
| $Z_4^2(r,\Theta)$ | Astigmatismus | $(4r^4 - 3r^2) \cdot \cos(2\Theta)$ |
| $Z_4^{-2}(r,\Theta)$ | Astigmatismus | $(4r^4 - 3r^2) \cdot \sin(2\Theta)$ |

In einer weiteren bevorzugten Ausführungsform werden 25 Zernike-Koeffizienten berücksichtigt. Dazu weist die Eingabeschicht vorzugsweise 25 Eingabeknoten auf. Die gewichteten Signale werden dann an die erste verborgene Schicht übertragen. In dieser befinden sich vorzugsweise 7 bis 12 Neuronen besonders bevorzugt mit einer sigmoiden Aktivierungsfunktion. Besonders bevorzugt sind ein oder zwei verborgene Schichten mit jeweils maximal 12 Neuronen. Im Falle von zwei verborgenen Schicht ist die zweite verborgene Schicht vorzugsweise mit der ersten identisch. In der Ausgabeschicht sind vorzugsweise fünf Neuronen mit einer besonders bevorzugt linearen Aktivierungsfunktion vorhanden. Diese geben vorzugsweise folgende Werte aus:

Tabelle 2: Ausgabe des Netzes

| Position z | Verschiebung entlang der optischen Achse 20 |
|---|---|
| Position x | Dezentrierung |
| Position y | Dezentrierung |
| Kippung x | Kippung um die x-Achse |
| Kippung y | Kippung um die y-Achse |

Damit das neuronale Netz aus gegebenen Eingabewerten in Form von Zernike-Koeffizienten die Ausgabewerte, also die Position des Prüflings berechnen kann, wird es trainiert. Das Training erfolgt vorzugsweise mittels des Levenberg-Marquardt-Algorithmus. Dieser arbeitet mit der Summe der kleinsten Quadrate. Die Funktion

$$F_i(Z) = \frac{1}{2}\sum_{i=1}^{m}[f_i(x)]^2$$

welche die Summe der quadratischen Abweichung der Istwerte von den Sollwerten darstellt, wird hierbei minimiert. Die Funktion wird dabei in einem iterativen Verfahren minimiert, wobei wie im Gauß-Newton-Verfahren ein linearisiertes Ersatzproblem betrachtet wird. Die Soll-Daten, welche für das Lernen erforderlich sind, werde dabei beispielsweise mittels des im Zusammenhang mit Fig. 1 beschriebenen Simulator-Moduls 60 erzeugt. Wird das Netzwerk mit diesen für einen idealen Prüfling generierten Daten trainiert, ist es in der Lage aus einem Datensatz an Zernike-Koeffizienten für den realen Prüfling die aktuelle Position bzw. Abweichung des Prüflings zu berechnen. Die Abweichung der errechneten (korrigierten) Stellung von der perfekten Stellung (Sollstellung) liegt bei einem gut trainiertem Netz vorzugsweise unter 5% der anfänglichen Abweichung. Um die Justiergenauigkeit weiter zu erhöhen, wird die Positionierung vorzugsweise nicht in einem Schritt durchgeführt, sondern sie wird iteriert. In jedem Iterationsschritt wird zuerst ein Interferogramm aufgenommen. Danach wird ein Zernike-Fit an die erhaltene Wellenfront gemacht und die Koeffizienten als Eingang auf das neuronale Netz gegeben. Ein erneutes Trainieren ist hierzu natürlich nicht erforderlich. Das neuronale Netz liefert dann als Ausgang die neue Stellung bzw. die erforderliche Stellungskorrektur, welche anschießend angefahren wird. Danach wird das ganze gegebenenfalls wiederholt, bis die gewünschte Genauigkeit erreicht ist. Es ergab sich, dass in der Regel nach etwa 5 bis 10 solcher Iterationen eine ausreichend präzise Justierung erreicht wird.

**Bezugszeichenliste**

| | |
|---|---|
| 10 | Prüfsystem |
| 12 | Mikrolinsen-Array |
| 14 | kollimierter Lichtstrahl |
| 16 | Lochblenden-Array |
| 18 | Eingangsblendenelement |
| 20 | erste optische Achse |
| 22 | kugelförmige Lichtwelle |
| 24 | Strahlteiler |
| 26 | Kollimator |
| 28 | ebene Wellenfront der Objektwelle |
| 30 | Interferometerobjektiv |
| 32 | objektseitige Wellenfront der Objektwelle |
| 34 | zu untersuchende optische Fläche |
| 36 | Prüfling |
| 38 | Manipulationseinheit |
| 40 | zweite optische Achse |
| 42 | Aperturblende |
| 44 | Abbildungslinse |
| 46 | Kamera |
| 48 | einfallender Referenzstrahl |
| 50 | Referenzstrahl-Kollimationslinse |
| 52 | Referenzstrahl |
| 54 | Interferogramm |
| 56 | Modell-Eingabe-Schnittstelle |
| 58 | Solldaten |
| 60 | Simulator-Modul |
| 62 | Trainingsdatensätze |
| 64 | neuronales Netz |
| 66 | Bilddaten |
| 68 | Analysator-Modul |

70    Wellenfront-Koeffizienten
72    Stellungskorrekturdaten
74    Treibereinheit
76    Steuersignale
78    Anzeige-Modul (Bildschirm)
80    Eingabeschicht
82    verborgene Schicht
84    Ausgabeschicht

**Patentansprüche**

1.  Verfahren zum Justieren einer zu untersuchenden optischen Fläche (34) in einer Prüfvorrichtung zur interferometrischen Untersuchung von Abweichungen der zu untersuchenden optischen Fläche (34) von Sollvorgaben, umfassend:

    - Erfassen eines Interferogramms (54) aus der Interferenz zwischen einem von der optischen Fläche (34) auslaufenden Objektlicht und einem Referenzlicht bei einer Startstellung der zu untersuchenden optischen Fläche (34) in der Prüfvorrichtung;
    - Ermitteln eines Satzes von Wellenfront-Koeffizienten (70) zur Beschreibung der Wellenfront des Objektlichts aus dem erfassten Interferogramm (54);
    - Bereitstellen eines neuronalen Netzes (64), welches trainiert ist, den sich für eine ideale optische Fläche, welche mit den Sollvorgaben übereinstimmt, bei Stellungsabweichungen der idealen optischen Fläche von einer Sollstellung in der Prüfvorrichtung ergebenen Sätzen von Wellenfront-Koeffizienten als Eingabedaten des neuronalen Netzes jeweils die entsprechende Stellungsabweichung als Ausgabedaten des neuronalen Netzes zuzuordnen;
    - Zuführen des ermittelten Satzes von Wellenfront-Koeffizienten (70) für die zu untersuchende optische Fläche (34) als Eingabedaten für das bereitgestellte neuronale Netz (64) zur Ermittlung einer Stellungsabweichung für die zu untersuchende optische Fläche (34) als Ausgabedaten des bereitgestellten neuronalen Netzes; und
    - Korrigieren der Stellung der zu untersuchenden optischen Fläche (34) in der Prüfvorrichtung gemäß der ermittelten Stellungsabweichung für die zu untersuchende optische Fläche (34).

2.  Verfahren nach Anspruch 1, wobei das Bereitstellen eines neuronalen Netzes umfasst:

    - Vorgeben einer Vielzahl von Abweichungen der ideal optischen Fläche von der Sollstellung in der Prüfvorrichtung;
    - Berechnen der sich für jede der vorgegebenen Abweichungen für die ideale optische Fläche ergebenen Sätze von Wellenfront-Koeffizienten mittels Ray-Tracing; und
    - Trainieren des neuronalen Netzes mit den berechneten Sätzen von Wellenfront-Koeffizienten als Eingabedaten und den vorgegebenen Abweichungen als Ausgabedaten.

3.  Verfahren nach einem der vorangegangenen Ansprüche, wobei das Ermitteln eines Satzes von Wellenfront-Koeffizienten ein Entwickeln der Wellenfront des von der optischen Fläche auslaufenden Objektlichts nach Zernike-Polynomen umfasst und wobei die Zernike-Koeffizienten als Wellenfront-Koeffizienten verwendet werden.

4.  Verfahren nach einem der vorangegangenen Ansprüche, wobei das neuronale Netz als Feed-Forward-Netz bereitgestellt wird, welches umfasst:

    - eine Ausgabesschicht mit einer Vielzahl von Neuronen, welche ausgelegt sind, Werte für die Stellungsabweichung auszugeben;
    - zumindest eine verborgene Schicht mit einer Vielzahl von Neuronen, von denen jedes Neuron mit jedem Neuron der Ausgabeschicht verbunden ist; und
    - eine Eingabeschicht mit einer Vielzahl von Eingabeknoten, von denen jeder Knoten mit jedem Neuron einer verborgenen Schicht des neuronalen Netzes verbunden ist.

5.  Verfahren nach Anspruch 4, wobei die Eingabeschicht eine Anzahl von Eingabeknoten im Bereich von 10 bis 25, vorzugsweise im Bereich von 10 bis 15 umfasst.

**6.** Verfahren nach Anspruch 4 oder 5, wobei die zumindest eine verborgene Schicht eine Anzahl von Neuronen im Bereich von 7 bis 12, vorzugsweise im Bereich von 7 bis 10, am meisten bevorzugt 8 oder 9 umfasst.

**7.** Verfahren nach einem der Ansprüche 4 bis 6, wobei die Ausgabeschicht 5 Neuronen umfasst.

**8.** Verfahren nach einem der Ansprüche 4 bis 7, wobei die Neuronen der Ausgabeschicht eine lineare Aktivierungsfunktion aufweisen.

**9.** Verfahren nach einem der Ansprüche 4 bis 8, wobei die Neuronen der zumindest einen verborgenen Schicht eine endliche Aktivierungsfunktion, insbesondere eine Sigmoid-Funktion aufweisen.

**10.** Verfahren nach einem der vorangegangenen Ansprüche, wobei beim Bereitstellen des neuronalen Netzes als Trainingswerte die Zernike-Koeffizienten für eine Anzahl von verschiedenen Abweichungen von der Sollposition im Bereich von etwa 150 bis etwa 1000, vorzugsweise im Bereich von etwa 200 bis etwa 500 ermittelt/vorgegeben werden.

**11.** Verfahren nach einem der vorangegangenen Ansprüche, wobei die Schritte des Erfassens eines Interferogramms, des Ermittelns eines Satzes von Wellenfront-Koeffizienten, des Zuführens des ermittelten Satzes von Wellenfront-Koeffizienten als Eingabedaten an das neuronale Netz und des Korrigierens der Stellung der zu untersuchenden optischen Fläche mehrfach wiederholt werden.

**12.** System zum Justieren einer zu untersuchenden optischen Fläche (34) in einer Prüfvorrichtung zur interferometrischen Untersuchung von Abweichungen der zu untersuchenden optischen Fläche (34) von Sollvorgaben, umfassend:

- eine Bilddatenerfassungseinrichtung ausgelegt zum Erfassen eines Interferogramms (54) aus der Interferenz zwischen einem von der optischen Fläche (34) auslaufenden Objektlicht und einem Referenzlicht bei einer Startstellung der optischen Fläche (34) in der Prüfvorrichtung;
- ein Analysator-Modul (68) ausgelegt zum Ermitteln eines Satzes von Wellenfront-Koeffizienten (70) zur Beschreibung der Wellenfront des von der optischen Fläche auslaufenden Objektlichts aus dem erfassten Interferogramm (54);
- ein neuronales Netz (64), welches trainiert ist, den sich für eine ideale optische Fläche, welche mit den Sollvorgaben übereinstimmt, bei Stellungsabweichungen der idealen optischen Fläche von einer Sollstellung in der Prüfvorrichtung ergebenen Sätzen von Wellenfront-Koeffizienten als Eingabedaten des neuronalen Netzes jeweils die entsprechende Stellungsabweichung als
Ausgabedaten des neuronalen Netzes zuzuordnen,

wobei das neuronale Netz (64) mit dem Analysator-Modul (68) zur Übertragung des ermittelten Satzes von Wellenfront-Koeffizienten (70) für die zu untersuchende optische Fläche (34) als Eingabedaten für das neuronale Netz (64) in Signalverbindung steht und zur Ermittlung einer Stellungsabweichung für die zu untersuchende optische Fläche (34) als Ausgabedaten ausgelegt ist; und
wobei das System eine Stellungskorrekturschnittstelle zum Ausgeben von Stellungskorrekturdaten für die Korrektur der Stellung der zu untersuchenden optischen Fläche (34) in der Prüfvorrichtung gemäß der vom neuronalen Netz (64) ermittelten Stellungsabweichung für die zu untersuchende optische Fläche (34) umfasst.

**13.** System nach Anspruch 12, welches ein Simulator-Modul umfasst, das ausgelegt ist, den sich für jede einer Vielzahl von vorgegebenen Abweichungen der idealen optischen Fläche von der Sollstellung in der Prüfvorrichtung ergebenden Satz von Wellenfront-Koeffizienten mittels Ray-Tracing zur berechnen, wobei das Simulator-Modul mit dem neuronalen Netz zum Trainieren des neuronalen Netzes mit den berechneten Sätzen von Wellenfront-Koeffizienten als Eingabedaten und den vorgegebenen Abweichungen als Ausgabedaten verbunden oder verbindbar ist.

**14.** Prüfvorrichtung zur interferometrischen Untersuchung von Abweichungen einer zu untersuchenden optischen Fläche von Sollvorgaben umfassend:

- ein Interferometer zur Erzeugung eines Interferogramms aus der Interferenz zwischen einem von der optischen Fläche auslaufenden Objektlicht und einem Referenzlicht bei einer Startstellung der optischen Fläche in der Prüfvorrichtung;
- ein System gemäß Anspruch 12 oder 13 zum Justieren der zu untersuchenden optischen Fläche im Strahlengang des Interferometers; und
- eine Manipulationseinheit zum Korrigieren der Stellung der optischen Fläche in der Prüfvorrichtung gemäß den ausgegebenen Stellungskorrekturdaten.

15. Computerprogrammprodukt, welches maschinenlesbaren Programmcode umfasst, der, wenn er geladen wird auf einem Computer, zur Ausführung eines Verfahrens gemäß einem der Ansprüche 1 bis 11 geeignet ist.

**Claims**

1. A method for adjusting an optical surface (34) to be examined in a test device for interferometric examination of deviations of the optical surface (34) to be examined from target specifications, comprising:

   - obtaining an interferogram (54) from the interference between object light coming from the optical surface (34) and reference light in a starting position of the optical surface (34) to be examined in the test device;
   - determining a set of wavefront coefficients (70) for describing the wavefront of the object light from the obtained interferogram (54);
   - providing a neuronal network (64) trained to assign to the sets of wavefront coefficients as input data of the neuronal network, which result for an ideal optical surface corresponding to the target specifications in the case of position deviations of the ideal optical surface from a target position in the test device, the respective corresponding position deviation as output data of the neuronal network;
   - supplying the determined set of wavefront coefficients (70) for the optical surface (34) to be examined as input data for the provided neuronal network (64) for determining a position deviation for the optical surface (34) to be examined as output data of the provided neuronal network; and
   - correcting the position of the optical surface (34) to be examined in the test device according to the determined position deviation for the optical surface (34) to be examined.

2. The method according to claim 1, wherein providing a neuronal network comprises:

   - specifying a plurality of deviations of the ideal optical surface from the target position in the test device;
   - calculating the sets of wavefront coefficients resulting for each of the predetermined deviations for the ideal optical surface by means of ray tracing; and
   - training the neuronal network with the calculated sets of wavefront coefficients as input data and the predetermined deviations as output data.

3. The method according to one of the preceding claims, wherein determining a set of wavefront coefficients comprises developing the wavefront of the object light coming from the optical surface according to Zernike polynomials, and wherein the Zernike coefficients are used as wavefront coefficients.

4. The method according to one of the preceding claims, wherein the neuronal network is provided as a feed-forward network, which comprises:

   - an output layer with a plurality of neurons adapted to output values for the position deviation;
   - at least one hidden layer with a plurality of neurons, each neuron of which being connected to each neuron of the output layer; and
   - an input layer with a plurality of input nodes, each node of which being connected to each neuron of a hidden layer of the neuronal network.

5. The method according to claim 4, wherein the input layer comprises a number of input nodes in the range from 10 to 25, preferably in the range from 10 to 15.

6. The method according to claim 4 or 5, wherein the at least one hidden layer comprises a number of neurons in the range to 7 to 12, preferably in the range from 7 to 10, most preferably 8 or 9.

7. The method according to one of claims 4 to 6, wherein the output layer comprises 5 neurons.

8. The method according to one of claims 4 to 7, wherein the neurons of the output layer have a linear activation function.

9. The method according to one of claims 4 to 8, wherein the neurons of the at least one hidden layer have a finite activation function, particularly a sigmoid function.

10. The method according to one of the preceding claims, wherein, when the neuronal network is provided, the Zernike coefficients for a number of different deviations from the target position in the range from approximately 150 to approximately 1000, preferably in the range from approximately 200 to approximately 500, are determined/specified as training values.

11. The method according to one of the preceding claims, wherein the steps of obtaining an interferogram, determining a set of wavefront coefficients, supplying the determined set of wavefront coefficients as input data to the neuronal network, and correcting the position of the optical surface to be examined are repeated several times.

12. A system for adjusting an optical surface (34) to be examined in a test device for interferometric examination of deviations of the optical surface (34) to be examined from target specifications, comprising:

- an image data obtaining device adapted to obtain an interferogram (54) from the interference between object light coming from the optical surface (34) and reference light in a starting position of the optical surface (34) to be examined in the test device;
- an analyser module (68) adapted to determine a set of wavefront coefficients (70) for describing the wavefront of the object light from the obtained interferogram (54);
- a neuronal network (64) trained to assign to the sets of wavefront coefficients as input data of the neuronal network, which result for an ideal optical surface corresponding to the target specifications in the case of position deviations of the ideal optical surface from a target position in the test device, the respective corresponding position deviation as output data of the neuronal network;
- wherein the neuronal network (64) is in signal communication with the analyser module (68) for transmission of the determined set of wavefront coefficients (70) for the optical surface (34) to be examined as input data for the neuronal network (64) and adapted for determining a position deviation for the optical surface (34) to be examined as output data; and
- wherein the system comprises a position correction interface for outputting position correction data for the correction of the position of the optical surface (34) to be examined in the test device according to the determined position deviation for the optical surface (34) to be examined, determined by the neuronal network (64).

13. The system according to claim 12, which comprises a simulator module adapted to calculate the set of wavefront coefficients resulting for each of the plurality of predetermined deviations of the ideal optical surface from the target position in the test device by means of ray tracing, wherein the simulator module is connected or connectable to the neuronal network for training the neuronal network with the calculated sets of wavefront coefficients as input data and the predetermined deviations as output data.

14. A test device for interferometric examination of deviations of an optical surface to be examined from target specifications, comprising:

- an interferometer for generating an interferogram from the interference between object light coming from the optical surface and reference light in a starting position of the optical surface in the test device;
- a system according to claims 12 or 13 for adjusting the optical surface to the examined in the optical path of the interferometer; and
- a manipulation unit for correcting the position of the optical surface in the test device according to the output position correction data.

15. A computer program product comprising machine-readable program code, which, when loaded on a computer, is suitable for performing a method according to one of claims 1 to 11.

**Revendications**

1. Procédé d'ajustage d'une surface optique à examiner (34) dans un dispositif de contrôle pour l'examen interférométrique d'écarts de la surface optique à examiner (34) de paramètres de consigne, comprenant :

- détection d'un interférogramme (54) à partir de l'interférence entre une lumière d'objet s'échappant de la surface optique (34) et une lumière de référence dans le cas d'une position de départ de la surface optique à examiner (34) dans le dispositif de contrôle ;

- détermination d'un ensemble de coefficients de front d'onde (70) pour décrire le front d'onde de la lumière d'objet à partir de l'interférogramme détecté (54) ;

- préparation d'un réseau neuronal (64) qui est entraîné à associer à chaque fois l'écart de position correspondant en tant que données de sortie du réseau neuronal aux ensembles de coefficients de front d'onde résultant pour une surface optique idéale qui coïncide avec les paramètres de consigne dans le cas d'écarts de position de la surface optique idéale d'une position de consigne dans le dispositif de contrôle en tant que données d'entrée du réseau neuronal ;

- alimentation de l'ensemble déterminé de coefficients de front d'onde (70) pour la surface optique à examiner (34) en tant que données d'entrée pour le réseau neuronal préparé (64) pour déterminer un écart de position pour la surface optique à examiner (34) en tant que données de sortie du réseau neuronal préparé ; et

- correction de la position de la surface optique à examiner (34) dans le dispositif de contrôle conformément à l'écart de position déterminé pour la surface optique à examiner (34).

2. Procédé selon la revendication 1, dans lequel la préparation d'un réseau neuronal comprend :

- spécification d'une pluralité d'écarts de la surface optique idéale de la position de consigne dans le dispositif de contrôle ;

- calcul des ensembles de coefficients de front d'onde résultant pour chacun des écarts spécifiés pour la surface optique idéale au moyen du lancer de rayon ; et

- entraînement du réseau neuronal avec les ensembles calculés de coefficients de front d'onde en tant que données d'entrée et les écarts spécifiés en tant que données de sortie.

3. Procédé selon l'une quelconque des revendications précédentes, dans lequel la détermination d'un ensemble de coefficients de front d'onde comprend un développement du front d'onde de la lumière d'objet s'échappant de la surface optique selon les polynômes de Zernike et dans lequel les coefficients de Zernike sont utilisés en tant que coefficients de front d'onde.

4. Procédé selon l'une quelconque des revendications précédentes, dans lequel le réseau neuronal est préparé en tant que réseau d'action directe qui comprend :

- une couche de sortie avec une pluralité de neurones qui sont conçus pour émettre des valeurs pour l'écart de position ;

- au moins une couche cachée avec une pluralité de neurones parmi lesquels chaque neurone est relié à chaque neurone de la couche de sortie ; et

- une couche d'entrée avec une pluralité de noeuds d'entrée parmi lesquels chaque noeud est relié à chaque neurone d'une couche cachée du réseau neuronal.

5. Procédé selon la revendication 4, dans lequel la couche d'entrée comprend un nombre de noeuds d'entrée dans la plage de 10 à 25, de préférence dans la plage de 10 à 15.

6. Procédé selon la revendication 4 ou 5, dans lequel l'au moins une couche cachée comprend un nombre de neurones dans la plage de 7 à 12, de préférence dans la plage de 7 à 10, de manière préférée entre toutes 8 ou 9.

7. Procédé selon l'une quelconque des revendications 4 à 6, dans lequel la couche de sortie comprend 5 neurones.

8. Procédé selon l'une quelconque des revendications 4 à 7, dans lequel les neurones de la couche de sortie présentent une fonction d'activation linéaire.

9. Procédé selon l'une quelconque des revendications 4 à 8, dans lequel les neurones de l'au moins une couche cachée présentent une fonction d'activation finie, notamment une fonction sigmoïde.

10. Procédé selon l'une quelconque des revendications précédentes, dans lequel lors de la préparation du réseau neuronal en tant que valeurs d'entraînement les coefficients de Zernike pour un nombre d'écarts différents de la position de consigne dans la plage d'environ 150 à environ 1000, de préférence dans la plage d'environ 200 à environ 500 sont déterminés/spécifiés.

**11.** Procédé selon l'une quelconque des revendications précédentes, dans lequel les étapes de la détection d'un interférogramme, de la détermination d'un ensemble de coefficients de front d'onde, de l'alimentation de l'ensemble déterminé de coefficients de front d'onde en tant que données d'entrée au réseau neuronal et de la correction de la position de la surface optique à examiner sont répétées plusieurs fois.

**12.** Système d'ajustage d'une surface optique à examiner (34) dans un dispositif de contrôle pour l'examen interférométrique d'écarts de la surface optique à examiner (34) de paramètres de consigne, comprenant :

- un dispositif de détection de données d'image conçu pour la détection d'un interférogramme (54) à partir de l'interférence entre une lumière d'objet s'échappant de la surface optique (34) et une lumière de référence dans le cas d'une position de départ de la surface optique (34) dans le dispositif de contrôle ;
- un module analyseur (68) conçu pour la détermination d'un ensemble de coefficients de front d'onde (70) pour décrire le front d'onde de la lumière d'objet s'échappant de la surface optique à partir de l'interférogramme détecté (54) ;
- un réseau neuronal (64) qui est entraîné à associer à chaque fois l'écart de position correspondant en tant que données de sortie du réseau neuronal aux ensembles de coefficients de front d'onde résultant pour une surface optique idéale qui coïncide avec les paramètres de consigne dans le cas d'écarts de position de la surface optique idéale d'une position de consigne dans le dispositif de contrôle en tant que données d'entrée du réseau neuronal,

dans lequel le réseau neuronal (64) est en connexion de signal avec le module analyseur (68) pour la transmission de l'ensemble déterminé de coefficients de front d'onde (70) pour la surface optique à examiner (34) en tant que données d'entrée pour le réseau neuronal (64) et est conçu pour déterminer un écart de position pour la surface optique à examiner (34) en tant que données de sortie ; et

dans lequel le système comprend une interface de correction de position pour l'émission de données de correction de position pour la correction de la position de la surface optique à examiner (34) dans le dispositif de contrôle conformément à l'écart de position déterminé par le réseau neuronal (64) pour la surface optique à examiner (34).

**13.** Système selon la revendication 12, qui comprend un module simulateur qui est conçu pour calculer l'ensemble de coefficients de front d'onde résultant pour chacun d'une pluralité d'écarts spécifiés pour la surface optique idéale de la position de consigne dans le dispositif de contrôle au moyen du lancer de rayon, dans lequel le module simulateur est relié ou peut être relié au réseau neuronal pour l'entraînement du réseau neuronal avec les ensembles calculés de coefficients de front d'onde en tant que données d'entrée et les écarts spécifiés en tant que données de sortie.

**14.** Dispositif de contrôle pour l'examen interférométrique d'écarts d'une surface optique à examiner de paramètres de consigne, comprenant :

- un interféromètre pour la génération d'un interférogramme à partir de l'interférence entre une lumière d'objet s'échappant de la surface optique et une lumière de référence dans le cas d'une position de départ de la surface optique dans le dispositif de contrôle ;
- un système selon la revendication 12 ou 13 pour l'ajustage de la surface optique à examiner dans le chemin optique de l'interféromètre ; et
- une unité de manipulation pour la correction de la position de la surface optique dans le dispositif de contrôle conformément aux données de correction de position émises.

**15.** Produit de programme informatique qui comprend du code de programme lisible par machine qui, lorsqu'il est chargé sur un ordinateur, convient à réaliser un procédé selon l'une quelconque des revendications 1 à 11.

FIG 1

FIG 2

FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4933872 A

**In der Beschreibung aufgeführte Nicht-Patentliteratur**

- **G. BAER et al.** Automated surface positioning for a non-null test interferometer. *Optical Engineering,* September 2010, vol. 49 (9), 095602